Europäisches Patentamt

European Patent Office

Office européen des brevets

(19)

(11) **EP 0 574 987 B1**

(12) **FASCICULE DE BREVET EUROPEEN**

(45) Date de publication et mention
de la délivrance du brevet:
**17.12.1997 Bulletin 1997/51**

(51) Int Cl.[6]: **G01N 23/20**

(21) Numéro de dépôt: **93201646.2**

(22) Date de dépôt: **09.06.1993**

(54) **Dispositif de traitement d'un signal mesuré correspondant à l'intensité de rayons X réfléchie par une structure de couches multiples sur un substrat**

Vorrichtung zur Verarbeitung eines Messsignals, das der durch eine Mehrschichtenstruktur auf einem Substrat reflektierten Röntgenstrahlenintensität entspricht

Arrangement for processing a measurement signal corresponding to the intensity of X-rays reflected by a multilayer structure on a substrate

(84) Etats contractants désignés:
**DE FR GB NL**

(30) Priorité: **17.06.1992 FR 9207350**

(43) Date de publication de la demande:
**22.12.1993 Bulletin 1993/51**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB NL**

(72) Inventeur: **Frijlink, Peter**
**F-75008 Paris (FR)**

(74) Mandataire: **Lottin, Claudine et al**
**Société Civile S.P.I.D.**
**156, Boulevard Haussmann**
**75008 Paris (FR)**

(56) Documents cités:
- **COLLOQUE DE PHYSIQUE vol. 50, no. 10, 1 Octobre 1989, pages 39 - 65 J.BENATTAR ET AL. 'PHYSICAL PROPERTIES OF ULTRA THIN FIMS,ETC.' INTRODUCTION,P.40-41;X RAY REFLECTIVITY,P.46-51**
- **PROCEEDINGS OF THE SPIE VOL.690 vol. 690, 1 Décembre 1986, pages 135 - 145 B.YORK ET AL. 'STRUCTURAL DEPTH PROFILING BY GLANCING ANGLE X RAY DIFFRACTION'**
- **PHYSICA STATUS SOLIDI vol. 113A, no. 2, 1 Juin 1989, pages 431 - 437 N.FALEEV ET AL. 'DOUBLE CRYSTAL X RAY DIFFRACTION CHARACTERISTICS,ETC.' WHOLE DOCUMENT**
- **JOURNAL OF APPLIED PHYSICS vol. 67, no. 10, 15 Mai 1990, pages 6229 - 6236 H. HOLLOWAY 'X RAY INTERFEROMETRY AND ITS APPLICATION,ETC.' I,INTRODUCTION;IV. TRANSITION TO DYNAMICAL THEORY**

## Description

L'invention concerne un dispositif de traitement d'un signal mesuré correspondant à l'intensité réfléchie, en fonction de l'angle de rasance ($\Theta$), à une longueur d'onde ($\lambda_{RX}$) de rayons X, par une structure réelle de couches multiples empilées sur un substrat, ces couches présentant à leurs interfaces des différences faibles d'indice de réfraction.

Par angle de rasance, il faut entendre l'angle que fait le faisceau incident avec la surface réfléchissante, c'est-à-dire l'angle complémentaire de l'angle d'incidence.

L'invention trouve son application dans la réalisation de dispositif de tests de structures multicouches ; par exemple, l'invention peut être utilisée pour la détermination automatique de l'épaisseur et de la nature ou composition des couches de miroirs multicouches périodiques, ou bien d'hétérostructures de matériaux semiconducteurs empilés.

Il est déjà connu de l'état de la technique, par le brevet EP 0 468 582, un appareil de diffractométrie à rayons X comprenant des moyens optiques pour mesurer la réflectivité d'un échantillon solide. Cet appareil trouve son application dans la détermination des paramètres structuraux de miroirs multicouches travaillants dans le domaine des rayons X, formés de l'empilement de bicouches de matériaux de fort et faible indices de réfraction. Cet appareil permet d'effectuer une comparaison entre des paramètres calculés à partir de la courbe de réflectivité et des paramètres connus par des Tables de classement.

Le document cité divulgue un système de commande pour sélectionner des filtres optiques appropriés parmi des filtres ayant différents coefficients d'absorption, et pour déclencher leur mise en place sur le trajet du faisceau de rayons X réfléchis par une structure à tester. Grâce à ce système, la mesure de l'intensité réfléchie peut être effectuée au moyen d'un compteur proportionnel, de manière telle que ce dernier ne sorte jamais de sa région de fonctionnement linéaire quelles que soient les valeurs de l'intensité. Par compteur proportionnel, il faut entendre un dispositif comportant des gaz ionisables par le flux de photons à détecter, et fournissant un signal sous la forme d'une tension proportionnelle au nombre de photons reçus.

L'appareil connu comprend un système de report du signal de sortie du compteur proportionnel sur un dispositif de traitement de ce signal dans lequel un programme d'ordinateur permet de raccorder entre elles les différentes parties de la courbe de réflectivité obtenues en relation avec chacun des filtres du système commandé. On obtient ainsi une courbe de réflectivité lissée.

Cette courbe de réflectivité, établie à longueur d'onde $\lambda_{RX}$ constante d'une source de rayon X, et en fonction des variations de l'angle de rasance $\Theta$, est fortement décroissante entre la valeur dite critique $\Theta_C$ où la réflectivité est égale à 1, et des valeurs où l'angle de rasance est encore faible, c'est-à-dire inférieur à, ou de l'ordre de 4° (degrés). C'est pourquoi un système commandé de filtres est utilisé afin de pouvoir effectuer toutes les mesures d'intensité sans sortir du domaine de linéarité du compteur proportionnel. Cette courbe montre en outre un certain nombre de maxima d'intensité réfléchie assez marqués qui apparaissent pour des angles de rasance spécifiques. Les valeurs des angles de rasance $\Theta$ correspondant aux maxima vérifient la loi de Bragg qui s'énonce : $2d \sin \Theta = k\lambda$ (avec k = constante = un nombre entier) et permet le calcul de la période D des couches d'un système multicouches périodique.

Cependant cette détermination correspondant aux ordres de la réflexion doit aussi prendre en compte la nature des matériaux des couches. C'est pourquoi, selon l'enseignement du document cité, le pas D des couches périodiques de miroirs multicouches est déterminé, à partir de la courbe de réflectivité lissée, par comparaison avec des courbes théoriques construites à partir de Tables de classement.

Néanmoins, ce dispositif n'est applicable que dans les cas où la courbe de réflectivité montre des maxima lisibles, c'est-à-dire suffisamment marqués pour permettre une mesure précise de leur position en valeur d'angle de rasance. Ceci limite cette méthode aux structure multicouches formées d'empilements périodiques de couches dont les compositions des matériaux sont connues et dont les indices de refraction sont très différents, ainsi qu'aux miroirs multicouches de structure connue n'ayant pas une épaisseur trop importante, et dans lesquels la période n'est pas trop petite.

C'est pourquoi un des buts de la présente invention est de fournir un dispositif pour la détermination automatique de l'épaisseur et de la composition des couches de structure multicouches, dans les cas particulièrement difficiles où :

- les épaisseurs des couches ne sont pas périodiques mais différentes dans toute la structure ;
- les matériaux de la structure ne se retrouvent pas non plus de manière périodique ;
- de plus, les indices de réfraction des matériaux sont très proches d'une couche à l'autre ;
- et en outre certaines couches peuvent être extrêmement fines, par exemple moins d'1 nm.

Ce but est atteint au moyen du dispositif tel que défini dans le préambule et en outre muni des caractéristiques énoncées dans la revendication 1.

L'invention est décrite ci-après en détail en référence avec les figures annexées dont :

- la figure 1a représente une structure de couches réalisée sur un substrat, et testée au moyen du dispositif selon l'invention ;

- la figure 1b représente l'intensité réfléchie f($\Theta$) en fonction de l'angle de rasance $\Theta$, pour la structure de la figure 1a ;
- la figure 1c représente la fonction g($\Theta$) obtenue par le filtrage mathématique de la fonction f($\Theta$) représentée sur la figure 1b ;
- la figure 2a représente une structure théorique à une couche sur un substrat ;
- la figure 2b représente l'intensité réfléchie $t_1$($\Theta$) par la structure théorique de la figure 2a, calculée en fonction de l'angle de rasance $\Theta$ ;
- la figure 2c représente la fonction $h_1$($\Theta$) obtenue après un filtrage de la fonction $t_1$($\Theta$) de la figure 2b au moyen d'un filtre identique à celui qui est utilisé pour obtenir la courbe de la figure 1c ;
- la figure 3a représente une structure théorique à une couche sur un substrat, en outre munie d'une couche supérieure d'oxyde ;
- la figure 3b représente l'intensité réfléchie $t_2$($\Theta$) par la structure théorique de la figure 3a, calculée en fonction de l'angle de rasance $\Theta$ ;
- la figure 3c représente la fonction $h_2$($\Theta$) obtenue après un filtrage de la fonction $t_2$($\Theta$) de la figure 3b au moyen d'un filtre identique à celui qui est utilisé pour obtenir la courbe de la figure 1c :
- la figure 3d représente la variation de la longueur d'onde $\lambda$($\Theta$) calculée à partir de la fonction filtrée de la figure 3c ;
- la figure 3e représente la fonction CHIRP($\Theta$) ;
- la figure 4a représente un algorithme simplifié mis en oeuvre selon l'invention, et la figure 4b un algorithme pour une mise en oeuvre plus précise ;
- la figure 5 représente schématiquement la fonction du résultat G(d) de l'intégration sans lissage ;
- la figure 6 représente l'intensité réfléchie F(d) en fonction de la distance d mesurée dans la structure multicouches de la figure 1a, à partir de sa surface supérieure, cette intensité étant obtenue par le traitement des données d'intensité de la figure 1b au moyen du dispositif selon l'invention ;
- la figure 7 représente un diffractomètre à rayons X.

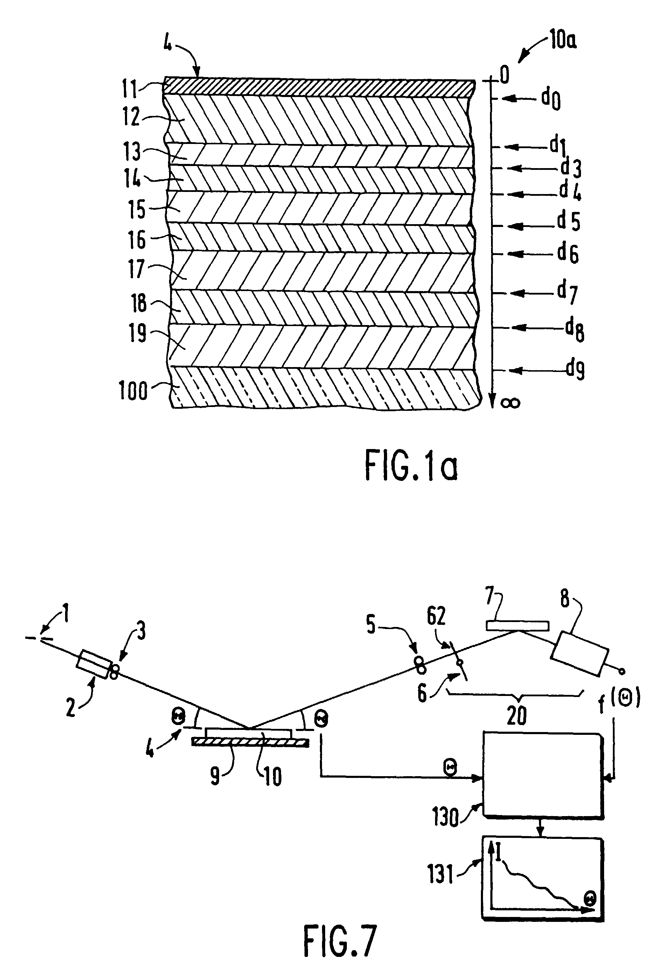

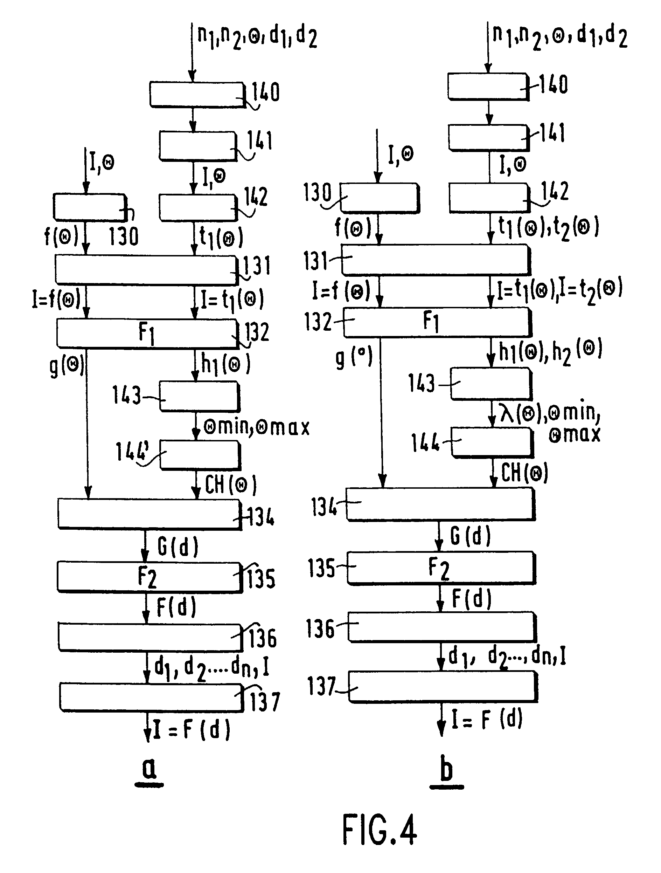

En référence avec la figure 1a et les figures 4, l'invention se propose de fournir un dispositif de traitement d'un signal mesuré correspondant à l'intensité réfléchie I, à une longueur d'onde $\lambda_{RX}$ de rayons X, par une structure réelle de couches multiples empilées sur un substrat 100, ces couches présentant à leurs interfaces des différences faibles d'indice de réfraction, ce dispositif de traitement comprenant des moyens pour effectuer la transformation de la fonction f($\Theta$) correspondant au signal d'intensité réfléchie mesuré en fonction de l'angle de rasance $\Theta$ dans un domaine d'angles de rasance limité par des valeurs d'angles minimales et maximales $\Theta_{min}$ - $\Theta_{max}$, en une fonction F(d) correspondant au signal d'intensité formulé en fonction de la profondeur d dans la structure réelle de couches multiples, cette fonction F(d) obtenue permettant d'établir une cartographie directe des profondeurs de chaque interfaces $d_1$, $d_2$, ... $d_n$ de la structure réelle, et des intensités réfléchies associées.

Le domaine $\Theta_{min}$ - $\Theta_{max}$ sera défini ultérieurement.

En référence avec la figure 7, l'homme du métier peut utiliser, pour réaliser la mesure de l'intensité réfléchie par un échantillon à tester, en fonction de l'angle de rasance $\Theta$, un appareil de diffractométrie à rayons X.

Les appareils connus, tels que par exemple commercialisés par Philips sous la référence PW1050, comprennent au moins :

- un système source 1, 2, 3 comportant :

  - une source linéaire 1 à rayons X ;
  - un système collimateur 2 et 3, incluant des fentes de Sollers 2 et une fente de divergence 3 ;
  - un porte-échantillons goniométrique 9 comprenant des moyens d'orientation (non représentés) pour un échantillon 10 : ces moyens comprennent en particulier un système pour sélectionner et enregistrer la valeur de l'angle de rasance $\Theta$ que fait le faisceau provenant du système source 1, 2, 3 vis-à-vis du plan supérieur 4 de l'échantillon 10 ;

- et un système capteur 120 du flux réfléchi comportant :

  - un système collimateur 5 formé d'une fente dite de réception ;
  - un monochromateur 7 dans le domaine des rayons X, par exemple un monochromateur graphite ;
  - un détecteur 8 du flux de rayons X, par exemple un compteur proportionnel ;
  - éventuellement un système de filtre 62 disposés dans un porte-filtres 6.

Tout appareil capable d'effectuer la mesure de l'intensité I = f($\Theta$) d'un faisceau rasant de rayons X réfléchi par un échantillon à tester, en fonction de l'angle de rasance $\Theta$, peut être utilisé au lieu de l'appareil décrit plus haut.

Dans le cas où l'appareil de la figure 7 est utilisé, le compteur proportionnel 8 fournit un signal proportionnel au flux des photons reçus et qui est reporté, avec la valeur des angles $\Theta$ correspondant à chaque valeur proportionnelle à l'intensité I, sur un moyen de stockage 130 de ces données. Le dispositif connu comprend éventuellement un traceur de courbe 131, qui, à partir des données issues du moyen de stockage 130, est capable de tracer une courbe continue représentant l'intensité $f(\Theta)$ portée en ordonnée en unités arbitraires (UA) comprises entre 0 et 1 en fonction de l'angle de rasance $\Theta$, porté en abscisse en degrés.

En référence avec la figure 1a, on se propose de tester au moyen du dispositif selon l'invention, une structure multicouches 10a. Cette structure 10a comprend, à partir de sa surface supérieure 4 :

- une couche d'oxyde 11 ;
- des couches de matériau semiconducteur d'arséniure de gallium (GaAs) 12, 14, 16, 18 ;
- des couches d'un autre matériau semiconducteur d'arséniure de gallium et d'aluminium ($Ga_xAl_{1-x}As$) 13, 15, 17, 19, formant des hétérostructures avec les couches de GaAs alternées ;
- un substrat en arséniure de gallium (GaAs) 100 ;

Dans cet échantillon de test :

- les distances $d_1$, $d_2$, $d_3$, ..., $d_n$ entre la surface supérieure 4 et chacune des interfaces GaAs/GaAlAs sont inconnues, car les épaisseurs exactes de dépôt par croissance épitaxiale de chacune des couches sont inconnues ;
- la composition exacte des couches de GaAlAs est inconnue, c'est-à-dire que la concentration x est inconnue ;
- l'indice de réfraction du matériau GaAlAs est très proche de celui du GaAs.

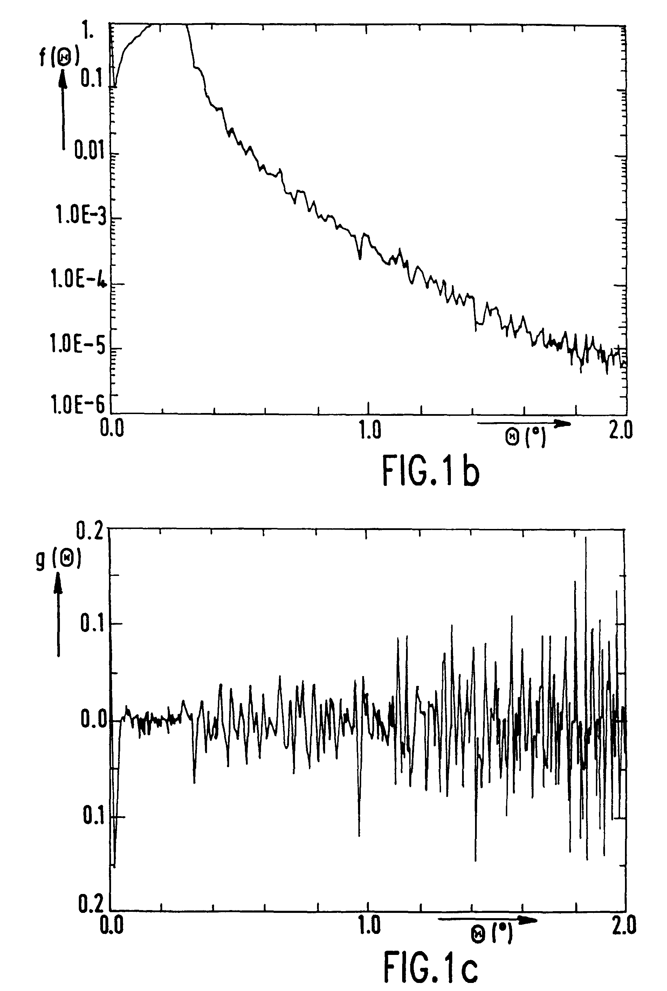

La figure 1b montre la courbe expérimentale de réflectivité de l'échantillon 10a à tester représentant les valeurs mesurées $f(\Theta)$ de l'intensité réfléchie I des rayons X, en fonction de l'angle de rasance $\Theta$.

On a vu précédemment que dans le diffractomètre de la figure 7, la source de rayons X émet un faisceau de rayons incidents qui font un angle $\Theta$ avec la surface 4 de l'échantillon 10 à tester, et qui sont réfléchis sous le même angle $\Theta$ par les différentes surfaces et interfaces de cet échantillon. Chacune des interfaces en commençant par l'interface air-première couche de matériau, provoque des réflexions. Les rayons ainsi réfléchis sont en interférences optiques qui sont constructives pour certaines valeurs de l'angle de rasance $\Theta$, et qui sont destructives pour d'autre valeurs. Il se trouve que dans le cas où la première interface est celle de l'air-semiconducteur, la première réflexion est d'intensité beaucoup plus grande que les autres. Il en résulte que cet effet des interférences tantôt constructives tantôt destructives produit une surmodulation qui se superpose à une courbe générale décroissante de l'intensité I en fonction de $\Theta$, telle que représentée sur la figure 1b. Si la structure consistait en une seule interface air-matériau, la courbe de réflectivité serait seulement descendante et lisse. La surmodulation est un effet caractéristique des structures multicouches.

On constate qu'à partir de cette mesure directe de l'intensité réfléchie par un échantillon multicouches, on est absolument incapable de réaliser la mesure qui donne la position $d_1$, $d_2$,... $d_n$ des interfaces par rapport à la surface supérieure de l'échantillon, ou bien la mesure d'épaisseur d'une couche dans la structure multicouches.

L'invention a pour but de fournir un dispositif pour déterminer directement les positions $d_1$, $d_2$, $d_3$,... $d_n$ des interfaces par rapport à la surface supérieure de l'échantillon à partir de l'intensité réfléchie I = $f(\Theta)$ du faisceau de rayons X mesurée en fonction de $\Theta$.

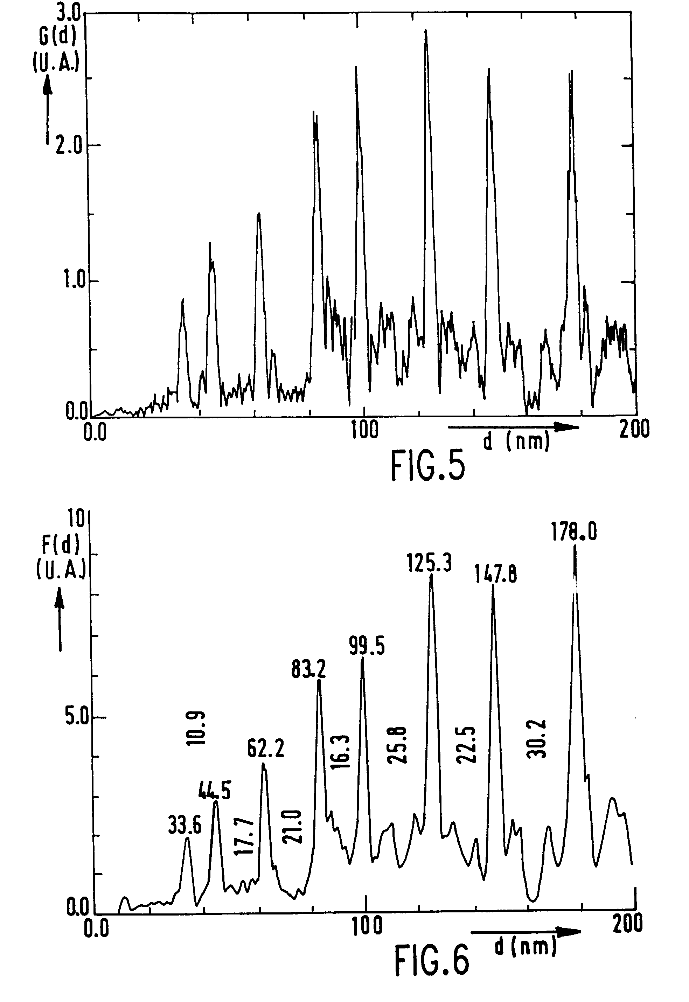

Ce problème est résolu par un dispositif qui inclut des moyens pour réaliser la Transformation de la fonction $f(\Theta)$ fournissant la courbe de la figure 1b, en une fonction $F(d)$ de l'intensité en fonction de la profondeur d fournissant la courbe de la figure 6.

A partir des seules données connues au départ qui sont :

- la valeur de l'intensité I réfléchie par la structure réelle en fonction de $\Theta$ ;
- la composition approximative des matériaux des couches, et leur nombre ;
- l'indice de réfraction moyen de la structure ;
- l'indice de réfraction du substrat ;

on va réaliser une Transformation de la fonction représentant l'intensité I en fonction de $\Theta$, en une autre fonction représentant l'intensité I en fonction de la profondeur d à l'intérieur de la structure. Ci-après on se referera à cette transformation par le terme "la Transformation" ou le terme "ladite Transformation".

La Transformation proposée permet d'arriver à la détermination des profondeurs d'interfaces $d_1$, $d_2$,... $d_n$ avec une précision de 0,5 nm. même si :

- les indices de réfraction des diverses couches sont peu différents ;
- les couches ont des épaisseurs très différentes.

- les couches sont très minces par exemple monoatomique.

La courbe d'intensité réfléchie de la figure 1b a été réalisée en faisant varier l'angle de rasance $\Theta$ entre 0 et 4°. En effet, pour apprécier des distances d dans le matériau à tester, qui sont de l'ordre de 1 à quelques centaines de nm, il faut que l'angle $\Theta$ soit petit afin que d et $\Theta$ vérifient la loi de Bragg.

Par $\Theta$ petit, on entend que l'angle de rasance reste compris entre $\Theta_C$, angle critique proche de 0 où l'intensité réfléchie I est égale à 1, et $\Theta_M$ qui est inférieur à, ou de l'ordre de 4°.

L'angle $\Theta_M$ est celui pour lequel on considère que l'on a recueilli suffisamment d'informations pour identifier toutes les interfaces de la structure.

Dans l'exemple décrit ci-après :

la longueur d'onde de la source de rayons X, $\lambda_{RX} = 4,5$ nm

et $\Theta$ est mesuré entre 0 et 2°.

Le domaine $\Theta_{min}$ - $\Theta_{max}$ sur lequel on effectue la Transformation sera défini ultérieurement à l'intérieur de l'intervalle $\Theta_c$ - $\Theta_M$.

La courbe de la figure 6 montre de nombreux pics. Chaque pic ou maximum caractérise une interface de la structure de la figure la. En coordonnée horizontale est portée la profondeur d dans la structure 10a et en coordonnée verticale est portée l'intensité I en unités arbitraires, entre 0 et 1.

La position de chaque pic caractérise la profondeur d'une interface dans la structure 10a par rapport à la surface 4.

La hauteur de chaque pic est influencée par de nombreux facteurs. En principe, la hauteur des pics dépend essentiellement de la différence des indices de réfraction des matériaux de chaque côtés de l'interface.

Mais la hauteur des pics est également influencée par :

- la raideur de l'interface ;
- la rugosité de l'interface ;
- la résolution en angle du système de mesure ;
- l'un des moyens du présent dispositif formé par un système de filtrage.

Néanmoins, le dispositif selon l'invention permet d'arriver à une fonction représentée par la courbe de la figure 6, de l'intensité en fonction de d, (F(d)), qui fournit les profondeur d et les intensités associées de manière telle que les performances et précisions citées plus haut sont atteintes.

Le dispositif qui permet de réaliser la Transformation du signal représenté sur la figure 1b pour arriver à celui qui est représenté sur la figure 6 offre l'avantage de fournir cette image I fonction de d directement en un seul passage.

Un autre avantage réside dans le fait que, lors de la détection des interfaces par la position des pics, respectivement en $d_1$, $d_2$, $d_3$ etc.., sur la courbe de la figure 6, les pics parasites qui apparaissent aux positions $2d_1$, $3d_1$, etc, $2d_2$, $3d_2$ etc, $2d_3$, $3d_3$ etc sont de tailles très réduites devant celles des pics principaux qui apparaissent en $d_1$, $d_2$, $d_3$ ... De même que, si l'on détecte deux interfaces à des profondeurs $d_1$ et $d_2$ respectivement, les pics parasites qui apparaissent à $d_1$ - $d_2$ et à $d_1$ + $d_2$ sont également petits par rapport aux pics principaux.

Donc le dispositif selon l'invention a permis de rendre minimes les contributions des pics correspondant aux multiples, aux sommes et aux différences des profondeurs d, et par conséquent de rendre la courbe de la figure 6 exploitable pour arriver aux buts de l'invention.

Il se trouve que, lorsqu'une structure telle que celle de la figure 1a montre de nombreuses interfaces, la surmodulation qui apparaît sur la courbe de réflectivité de la figure 1b est engendrée par la somme de plusieurs fonctions périodiques.

On pourrait alors penser à appliquer une simple intégrale de Fourier pour obtenir des valeurs importantes d'une intégrale pour chaque valeur relative à chacun des sinus de la somme, dans le but d'obtenir une courbe telle que celle de la figure 6.

Un problème apparaît aussitôt du fait que la longueur d'onde de la surmodulation montrée sur la courbe de la figure 1b n'est pas constante. Elle varie beaucoup, et notamment dans la région des petites valeurs de l'angle $\Theta$.

Donc, si l'on envisageait d'utiliser une intégrale de Fourier pour obtenir une courbe ayant un pic bien défini, relatif à un sinus donné, et si on ne tenait pas compte de cette variation de longueur d'onde, alors on obtiendrait un pic très large et qui serait inexploitable pour la détermination de la profondeur d'interface.

L'expérience a montré que, si une structure à plusieurs couches présentait peu d'interfaces peu profondes, on pourrait appliquer l'intégrale de Fourier, quoique sans beaucoup de précision dans le résultat obtenu.

Mais dès que la structure comprend des couches ayant une grande profondeur d'interface, ou bien comprend des interfaces très rapprochées, on n'a aucune chance de détecter ces interfaces en appliquant une intégrale de Fourier simple.

Une structure, dont l'analyse en matière de profondeur d'interfaces se révèle difficile, est par exemple celle d'un transistor à haute mobilité électronique (en anglais : HEMT) pseudomorphique qui présente trois interfaces principales, dont la dernière est très éloignée de l'interface air-première couche de matériau semiconducteur.

Le but de l'invention est de fournir un dispositif capable de traiter ces cas difficiles. Pour tenir compte du fait que la fonction $f(\Theta)$ correspondant au signal d'intensité réfléchie en fonction de l'angle de rasance $\Theta$ présente une surmodulation qui est la somme approximativement de fonctions périodiques à périodes variables de façon monotone en fonction de l'angle de rasance $\Theta$, selon l'invention, les moyens de Transformation de la fonction mesurée $f(\Theta)$ du signal d'intensité en fonction de l'angle de rasance $\Theta$, en la fonction $F(d)$ du signal d'intensité en fonction de la profondeur d dans la structure comprennent des moyens d'intégration, sur le domaine $\Theta_{min}$ - $\Theta_{max}$, de la fonction mesurée $f(\Theta)$ multipliée par une fonction $K_i(d, \Theta)$ périodique de la profondeur d et de l'angle $\Theta$, dont la période varie en fonction de l'angle $\Theta$ avec la même variation monotone que celle des fonctions périodiques qui sont les composantes de la fonction mesurée $f(\Theta)$.

En particulier la fonction périodique $K_i(d,\Theta)$ à variation monotone de période peut être une fonction pseudosinusoïdale dont la longueur d'onde $\lambda$ varie de façon monotone en fonction de $\Theta$, dans un intervalle donné $\Theta_{min}$ - $\Theta_{max}$.

Le dispositif selon l'invention comprend des moyens pour synthétiser une telle fonction périodique $K_i(d,\Theta)$ de la profondeur d et de l'angle $\Theta$, dont la période varie de façon monotone en fonction de $\Theta$.

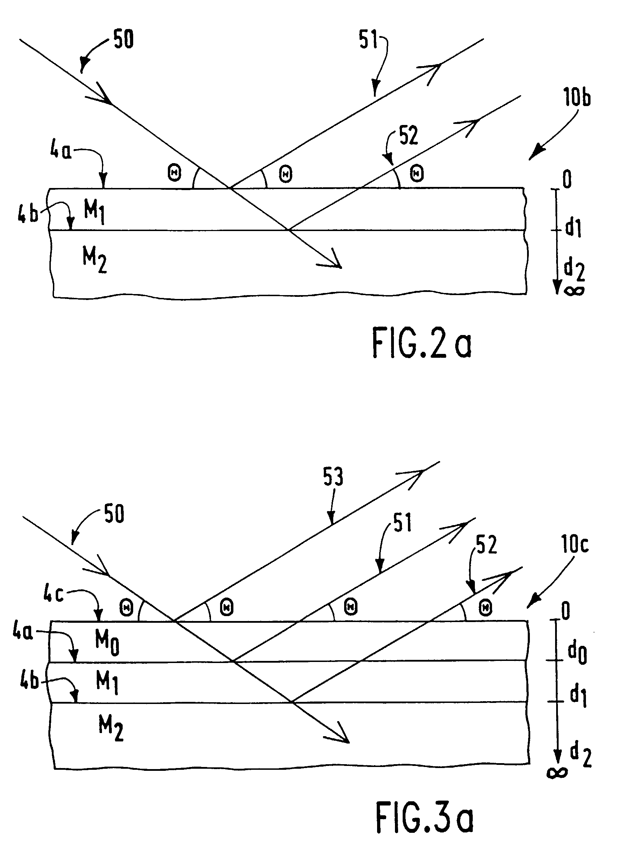

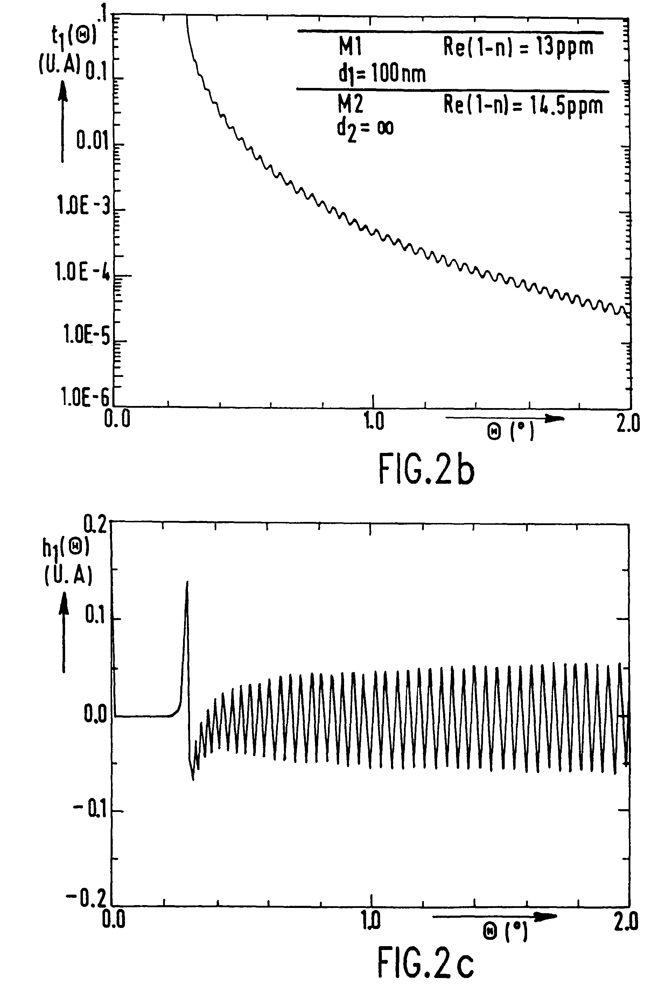

La figure 2a représente schématiquement une structure 10b théorique bâtie à partir des données approximatives seules connues relativement à la structure réelle 10a.

La structure théorique de la figure 2a comporte deux couches :

- une couche inférieure $M_2$ d'épaisseur telle que $d_2 = \infty$ pour symboliser l'épaisseur d'un substrat, et d'indice de réfraction $n_2$ égal à l'indice du substrat 100 de la structure réelle à tester 10a ;
- une couche supérieure $M_1$ d'épaisseur choisie arbitrairement telle que $d_1 = 100$ à 200 nm, et d'indice de réfraction $n_1$ égal à l'indice de réfraction moyen ou approximatif de la structure réelle 10a.

Dans ce modèle théorique, on considère que des rayons incidents 50 sont réfléchis d'une part par la surface supérieure 4a en 51 et d'autre part par l'interface 4b des couches $M_1/M_2$ en 52.

Dans l'exemple décrit ci-après, on a choisi :

pour $M_1$ , $d_1 = 100$ nm et Partie réelle de $(1-n_1) = 13$ ppm ;

pour $M_2$ , $d_2 = \infty$ et Partie réelle de $(1-n_2) = 14,5$ ppm.

Dans le courant de l'expérimentation à l'aide du dispositif selon l'invention, il est apparu que l'utilisation du modèle 10b théorique de la figure 2a donnait de bons résultats, mais que ces résultats pouvaient encore être améliorés par l'utilisation d'un autre modèle théorique 10c représenté sur la figure 3a.

Ce modèle théorique 10c qui est utilisé de préférence, comporte trois couches et est également bâti à partir des données approximatives relatives à la structure réelle 10a.

Ces couches sont :

- une couche inférieure $M_2$ d'épaisseur telle que $d_2 = \infty$ pour symboliser le substrat, et d'indice de réfraction $n_2$ égal à l'indice du substrat 100 de la structure réelle 10a ;
- une couche intermédiaire $M_1$ d'épaisseur choisie arbitrairement telle que $d_1 = 100$ à 200 nm, et d'indice de réfraction $n_1$ de l'ordre de grandeur de l'indice moyen de la structure 10a ;
- une couche supérieure $M_0$ d'oxyde, d'épaisseur choisie arbitrairement telle que $d_0 \simeq 1$ nm, et d'indice de réfraction $n_0$ présentant une petite différence avec celui de la couche $M_1$ sous-jacente.

Dans ce modèle théorique 10c, on considère que des rayons incident 50 sont réfléchis sous l'angle de rasance $\Theta$, selon 53 par la surface supérieure 4c de la structure 10c, selon 51 par l'interface 4a des couches $M_0/M_1$, et selon 52 par l'interface 4b des couches $M_1/M_2$.

Dans ce modèle théorique 10c, on entend maintenant par réflexion principale la réflexion qui est la somme de la réflexion à la surface de la couche d'oxyde $M_0$, et de la réflexion à l'interface entre l'oxyde et la première couche de matériau $M_1$. En effet, ces deux surfaces ont des coefficients de réflexion sensiblement identiques.

Dans l'exemple décrit ci-après on a choisi :

pour $M_0$, $d_0 = 1$ nm Partie réelle de $(1-n_0) = 9$ ppm ;

pour $M_1$, $d_1 = 100$ nm et Partie réelle de $(1-n_1) = 13$ ppm ;

pour $M_2$ , $d_2 = \infty$ et Partie réelle de $(1-n_2) = 14,5$ ppm.

A l'aide du dispositif de l'invention, un calcul théorique de la réflectivité en fonction de $\Theta$ est alors effectué, pour l'une des structures 10b ou 10c consistant essentiellement en :

- un substrat d'indice donné,
- surmonté d'une couche d'épaisseur donnée et d'indice de réfraction très proche de celui du substrat.

Ce calcul théorique peut être effectué par des moyens simples connues de l'homme du métier, par exemple programmé avec la fonction donnant la réflectivité. Puis les résultats sont stockés dans des moyens de stockage 140.

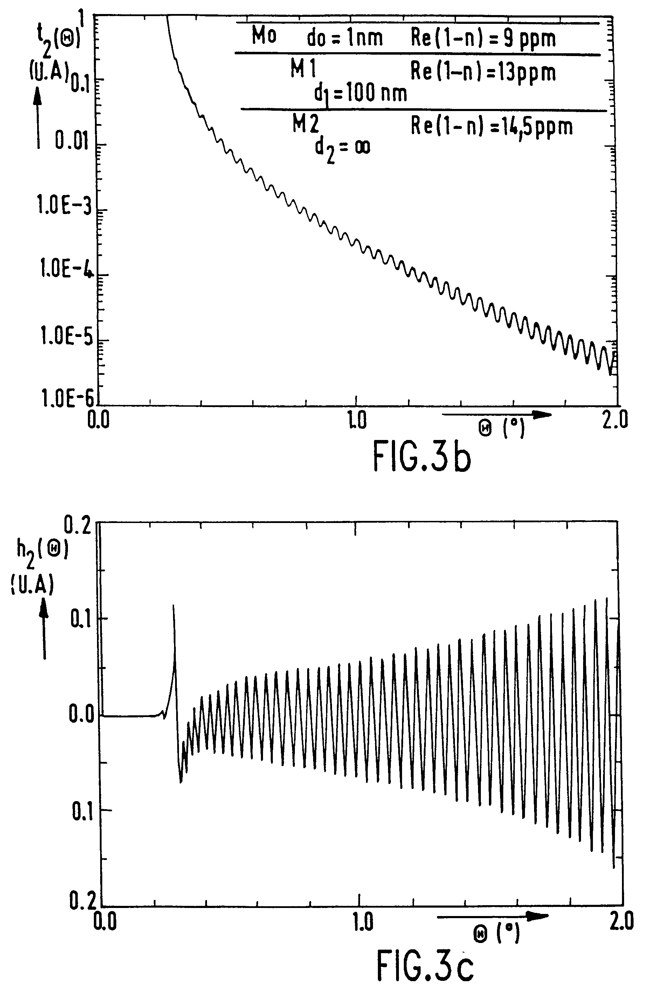

Il en résulte respectivement pour les structures 10b et 10c, les courbes $t_1(\Theta)$ et $t_2(\Theta)$ des figures 2b et 3b. Ces courbes représentent la réflectivité théorique qui décroît à partir de $\Theta_c$, l'angle critique, lorsque la valeur de $\Theta$ augmente. Comme précédemment, en référence avec ce qui a été dit pour la figure 1b, les courbes des figures 2b et 3b montrent une surmodulation.

Dans une variante du dispositif, on peut remplacer le calcul théorique de l'intensité I en fonction de $\Theta$, par le calcul théorique de Log I en fonction de $\Theta$.

Selon l'invention, pour rendre exploitable les informations relatives à la surmodulation des courbes des figures 1b et 2b ou 3b, on soumet la fonction $f(\Theta)$ donnant la réflectivité mesurée en fonction de $\Theta$, ainsi que les fonctions $t_1(\Theta)$ et $t_2(\Theta)$ des réflectivités théoriques à un filtre mathématique $F_1$. Le filtre $F_1$ est un filtre passe-bande de type passe-haut (en anglais HIGH-PASS FILTER) qui laisse passer les courtes longueurs d'onde et ne laissent pas passer les grandes longueurs d'onde de la courbe de réflectivité.

Le succès des moyens préconisés tient beaucoup aux caractéristiques de filtre $F_1$. Ce filtre ne doit pas décaler le signal en $\Theta$, et la longueur d'onde de coupure doit être soigneusement choisie.

Après le filtrage de la fonction $f(\Theta)$ des valeurs mesurées en relation avec la structure de test 10a, on obtient la fonction $g(\Theta)$ représentée sur la figure 1c qui ne montre plus que la surmodulation.

Il résulte de ce qu'on a dit précédemment, que ce signal représenté par la fonction $g(\Theta)$ sur la figure 1c est un signal composé de différents signaux de base ayant des fréquences (ou longueur d'onde $\lambda(\Theta)$) différentes s'exprimant sous la forme de somme de sinus, du fait que chaque signal est issu de l'interférence entre le signal correspondant à la réflexion principale sur la surface supérieure de la structure et le signal correspondant à la réflexion sur une interface à l'intérieur de la structure.

Après le filtrage des fonctions théoriques $t_1(\Theta)$ ou $t_2(\Theta)$, on obtient les fonctions théoriques $h_1(\Theta)$ ou $h_2(\Theta)$ respectivement représentées sur les figures 2c et 3c qui ne montrent plus que la surmodulation.

L'allure de la courbe 1c correspondant à la structure réelle est quasi-périodique, alors que l'allure des courbes théoriques $h_1(\Theta)$, $h_2(\Theta)$ de la figure 2c ou 3c est maintenant celle d'une fonction quasi-sinusoïdale dont la longueur d'onde $\lambda(\Theta)$ varie en fonction de $\Theta$. Dans tous les cas ces courbes théoriques montrent des passages à zéro. Il est alors possible de définir (ou calculer) cette longueur d'onde $\lambda(\Theta)$ en calculant les distances entre les zéros.

On a fait en outre une découverte importante en ce qui concerne cette fonction $\lambda(\Theta)$ : elle ne dépend absolument pas de la valeur de la profondeur d. Donc elle est identique pour toutes les interfaces, quelle que soit la distance d de l'interface avec la surface supérieure de la structure considérée. Tout au moins, la variation de $\lambda(\Theta)$ est identique pour les sytèmes de matériaux semiconducteurs.

Donc, il suffit de connaître les paramètres approchés des matériaux de la structure à étudier, par exemple une valeur approchée de son indice de réfraction par rapport à l'air, pour être en mesure de déterminer la variation de la longueur d'onde $\lambda(\Theta)$ de la courbe de réflectivité quasi-sinusoïdale filtrée $h_1(\Theta)$ ou $h_2(\Theta)$ obtenue à partir d'une structure théorique, telle que celle des figures 2a ou 3a, construite à l'aide de cette valeur approchée.

Or, la Transformation selon l'invention vise à créer un signal $k_i(d,\Theta)$ quasi-périodique théorique ayant une période qui a la même dépendance de sa période, vis-à-vis de l'angle $\Theta$, que le signal mesuré.

La Transformation vise ensuite à multiplier le signal expérimental $g(\Theta)$ (ou mesuré) avec le signal théorique quasi-périodique $k_i(d,\Theta)$ crée, puis à prendre l'intégrale de ce résultat sur tous les domaines d'angle $\Theta$.

Il se trouve que, à partir de la connaissance de cette variation de longueur d'onde $\lambda(\Theta)$ de la fonction théorique de réflectivité, on peut définir une telle Transformation applicable à la fonction réelle $g(\Theta)$ pour obtenir finalement une courbe donnant l'intensité réfléchie uniquement en fonction de la profondeur d'interface d. C'est donc uniquement pour pouvoir obtenir la variation de la longueur d'onde $\lambda(\Theta)$ de la courbe quasi-sinusoïdale que l'on a bâti la structure théorique et réalisé la courbe d'intensité réfléchie théorique $t_1(\Theta)$ ou $t_2(\Theta)$ relative aux figures 2a, 2b, 2c, ou bien 3a, 3b, 3c.

Dès qu'on obtient la connaissance de la variation de longueur d'onde $\lambda(\Theta)$ de la courbe quasi-sinusoïdale 2c ou 3c, on peut réaliser l'intégration de la courbe mesurée de la figure 1c incluant une somme de sinus, en tenant compte du fait que chacun des sinus varie en longueur d'onde avec la même variation de longueur d'onde que la courbe théorique.

Donc après le filtrage, dont le résultat $h_1(\Theta)$ ou $h_2(\Theta)$ est représenté sur la figure 2c ou 3c selon le modèle de structure théorique choisi, on réalise $\lambda(\Theta)$ puis on synthétise à partir de $\lambda(\Theta)$ ledit signal quasi-périodique $k_i(d,\Theta)$ ayant une dépendance de sa période en fonction de $\Theta$ identique à celle de chaque sinus dans le signal mesuré.

Cette fonction $\lambda(\Theta)$ est croissante à partir de $\Theta_c$ et tend vers un maximum $\lambda_{max}(\Theta)$ pour un angle de rasance $\Theta_{max}$. L'angle $\Theta_{max}$ pris en considération sera en principe l'angle maximal utilisé lors d'une mesure de test sur la structure réelle 10a.

On définit ensuite, de préférence, mais non obligatoirement, une longueur d'onde relative $\lambda_{rel}(\Theta)$ par le rapport $\lambda(\Theta)$ sur $\lambda_{max}(\Theta)$ afin de normaliser ladite longueur d'onde $\lambda(\Theta)$.

$$\lambda_{rel}(\Theta) = \lambda(\Theta) / \lambda_{max}(\Theta).$$

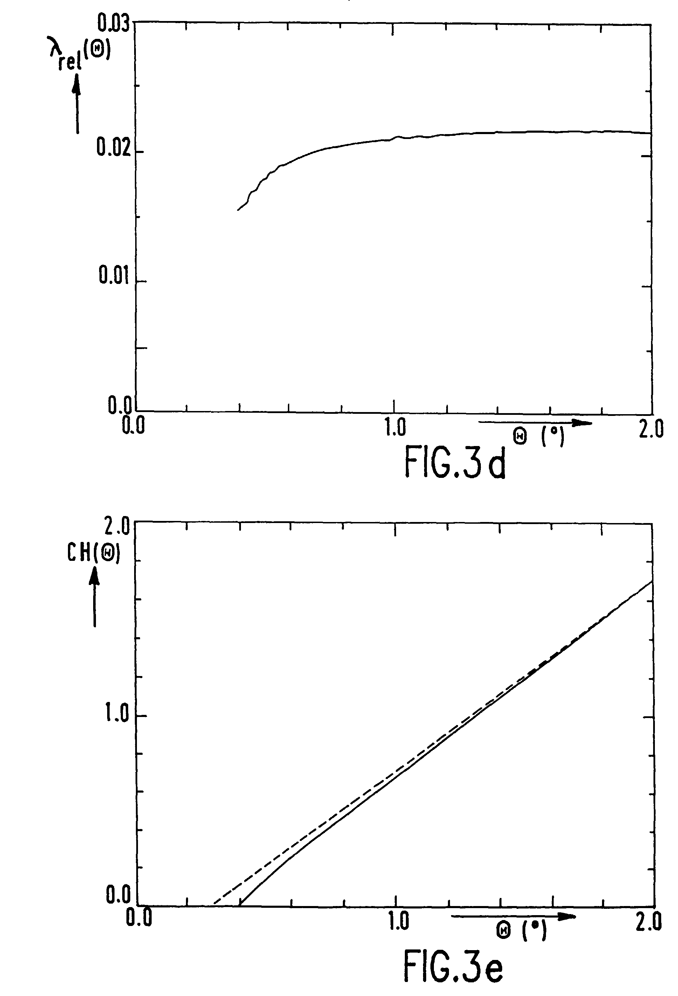

La fonction $\lambda_{rel}(\Theta)$ est représentée sur la figure 3d. Elle a la même allure que la fonction $\lambda(\Theta)$.

En fait, on pourrait se contenter d'appliquer les opérations ultérieures sur la fonction $\lambda(\Theta)$ elle-même. Cependant au cours des expériences pratiquées pour la mise en oeuvre de l'invention, on a trouvé de meilleurs résultats en appliquant ces opérations sur $\lambda_{rel}(\Theta)$, ce qui constitue donc une optimisation de la méthode d'utilisation du dispositif selon l'invention.

La fonction $\lambda_{rel}(\Theta)$ ne dépend pas non plus de la valeur de la profondeur d. Donc elle est identique pour toutes les interfaces, quelle que soit la distance de l'interface avec la surface supérieure de la structure considérée.

Maintenant, à partir de la fonction $\lambda(\Theta)$, ou bien $\lambda_{rel}(\Theta)$, on définit une nouvelle fonction que l'on a appelé CHIRP (et que l'on écrira CH). Par la fonction CHIRP, on va créer ladite fonction quasi-sinusoïdale à changement monotone de période $k_i(d,\Theta)$, c'est-à-dire dont la période varie de façon monotone avec la longueur d'onde $\lambda(\Theta)$. Par changement "monotone", il faut entendre "ayant toujours le même signe".

La fonction CHIRP s'écrit selon la formule :

$$CH(\Theta_k) = CH(\Theta_{k-1}) + 1/\lambda_{rel}(\Theta_k)$$

et est représentée sur la figure 3e. On voit quelle est croissante.

La courbe $\lambda(\Theta)$ a été déterminée de façon discrète par une série de points reportés sur la figure 3d pour chaque angle de rasance $\Theta_1, \Theta_2, ..., \Theta_{k-1}, \Theta_k$ auquel le calcul de l'intensité théorique est fait. C'est pourquoi la fonction CH est également calculée de façon discrète. La formulation proposée permet de passer de la série de points de la courbe de la figure 3d, à la série de points de la courbe de la figure 3e qui représente la fonction $CH(\Theta)$ obtenue en fonction de $\Theta$.

Donc, pour arriver à cette étape de l'utilisation du dispositif selon l'invention, on a jusqu'ici eu besoin seulement de l'indice de réfraction moyen de la structure réelle à tester, pour bâtir une structure théorique 10b ou bien 10c. Et avec cette seule donnée, on a calculé la fonction $CH(\Theta)$.

On formule alors la fonction pseudo-sinusoïdale $k_i(d,\Theta)$ recherchée au moyen de la relation :

$$K_i(d,\Theta) = \sin(\beta . d . CH(\Theta) + i \frac{\pi}{2})$$

où $\beta$ est une constante et où i est égal à 0 ou 1.

On a maintenant, par rapport à l'intégrale de Fourier classique, remplacé la fonction $\sin\Theta$ par une fonction sin (d, $\Theta$) dont la longueur d'onde varie comme décrit précédemment. On s'est ainsi affranchi des inconvénients que l'on aurait obtenus en utilisant une intégrale de Fourier simple.

Pour éviter que le résultat final ne soit trop influencé par un décalage d'angle du signal mesuré, le dispositif selon l'invention prévoit deux opérations dans l'intégration :

- une première multiplication de $g(\Theta)$ avec le signal théorique quasi-sinusoïdal créé,
- puis une seconde multiplication avec un signal créé identique, de même quasi-période, mais décalé d'1/4 de période.

La transformation comprend donc une première intégrale avec le signal créé non décalé, et une seconde intégrale avec le signal créé décalé, suivi de la sommation de la valeur absolue de ces intégrales.

Ce résultat est obtenu en appliquant le signal théorique quasi-sinusoïdale sous la forme d'un sinus dans la première intégrale, puis sous la forme d'un cosinus dans la seconde intégrale, ce qui donne le décalage voulu d'1/4 de période.

Si dans la transformation, on se restreignait au calcul d'une seule intégrale, on pourrait se trouver dans des cas où le résultat serait zéro du fait du décalage du signal mesuré.

On considère donc le signal $g(\Theta)$ représenté sur la figure 1c, obtenu à l'issue du filtrage par le filtre mathématique $F_1$ de la fonction $f(\Theta)$ représentée sur la figure 1b et on lui applique les deux intégrales suivantes :

$$G(d) = \left| \int_{\Theta_{min}}^{\Theta_{max}} g(\Theta) . K_0 (\Theta, \lambda) \, d\Theta \right| + \left| \int_{\Theta_{min}}^{\Theta_{max}} g(\Theta) . K_1 (\Theta, \lambda) \, d\Theta \right|$$

Une amélioration est encore obtenue en réalisant une nouvelle opération donnant une fonction G'(d) qui est la fonction G(d) divisée par l'intervalle $\Theta_{min}$, $\Theta_{max}$ telle que : G'(d) = G(d)/($\Theta_{max}$ - $\Theta_{min}$) . Les fonctions $K_1$ et $K_2$ sont données par :

$$K_0 = Sin(\beta.d.CH(\Theta))$$

$$K_1 = Cos(\beta.d.CH(\Theta))$$

dans lesquelles $\beta$ est une constante égale à $4\pi/\lambda_{RX}$ et d est la profondeur dans la structure réelle. (On rappelle que $\lambda_{RX}$ est la longueur d'onde de la source de rayons X).

On prend donc la valeur absolue de chacune des intégrales et on fait la somme de ces valeurs absolues.

Dans ces intégrales, on reconnaît outre la fonction expérimentale filtrée g($\Theta$), les deux fonctions mettant en oeuvre l'une le sinus de la fonction pseudo-sinusoïdale synthétisée plus haut, l'autre un cosinus des mêmes paramètres et variables.

Pour que l'intégrale préconisée selon l'invention donne de bons résultats, il faut choisir correctement l'intervalle d'intégration : il faut intégrer sur un nombre entier de périodes de la fonction $h_1(\Theta)$ ou $h_2(\Theta)$ théorique choisie. Il faut en outre intégrer sur un nombre entier de périodes le plus grand possible à l'intérieur du domaine considéré $\Theta_c$ - $\Theta_M$. Donc sur la courbe de la figure 2c, ou celle de la figure 3c, on choisit d'abord un angle minimum et un angle maximum qui définissent le domaine sur lequel on veut effectuer la Transformation. On définit ensuite l'intervalle entier pour l'intégration : $\Theta_{min}$ - $\Theta_{max}$. L'angle $\Theta_{min}$ est défini comme le premier zéro de la courbe de la figure 2c ou 3c, que l'on trouve lorsque $\Theta$ augmente. On regarde alors le signe de la dérivée de la fonction $h_1$ ou $h_2$ à ce premier zéro, puis on se reporte vers la fin de l'intervalle choisi, c'est-à-dire vers l'angle maximum choisi ; et à partir de ce dernier on redescend jusqu'au premier zéro où la fonction $h_1$ ou $h_2$ présente une dérivée de même signe. On a ainsi défini l'intervalle d'intégration le plus grand possible $\Theta_{min}$ - $\Theta_{max}$ avec un nombre entier de périodes de la fonction $h_1$ ou $h_2$. Les angles $\Theta_{min}$ et $\Theta_{max}$ dépendent évidemment de la variable d et devraient en toute rigueur être écrits $\Theta_{min}$(d) et $\Theta_{max}$(d). On écrira ci-après $\Theta_{min}$ et $\Theta_{max}$ par souci de simplicité dans l'écriture.

L'angle $\Theta_{min}$ est choisi proche, mais néanmoins pas trop près de l'angle critique $\Theta_c$, afin d'éviter d'éventuelles distorsions. Dans la pratique de l'analyse des structures de matériaux semiconducteurs, on choisit $\Theta_{min}$ de l'ordre de 0,4°. L'angle $\Theta_{max}$ quant à lui est choisi aussi éloigné que possible, tout en évitant la région où le bruit devient trop important. En effet, si l'on considère la courbe f($\Theta$) de la figure 1b, on constate que le bruit devient important aux fortes valeurs de $\Theta$ du fait que l'intensité mesurée devient faible. Il faut donc parfois couper l'intervalle d'intégration avant l'angle maximum $\Theta_M$ utilisé pour réaliser la mesure I = f($\Theta$).

Il faut cependant prendre en compte que plus grand est le domaine de $\Theta$ choisi, c'est-à-dire l'intervalle $\Theta_{min}$ - $\Theta_{max}$, plus fins seront les pics de la courbe I = F(d) de la figure 6, et meilleure la définition des profondeurs d'interface $d_1$, $d_2$,... $d_n$.

Le résultat de la Transformation n'est pas encore la fonction G(d) elle-même, telle que donnée plus haut. En effet, cette fonction G(d) est très accidentée comme montré sur la figure 5 ; elle présente de nombreux pics très fins et très rapprochés. Si le résultat de la Transformation s'arrêtait à la courbe représentative de la fonction G(d), il serait encombré d'informations gênantes non essentielles.

C'est pourquoi la fonction G(d) telle qu'obtenue après l'intégration est passée dans un filtre $F_2$ qui réalise une diffusion symétrique. La diffusion symétrique effectue un lissage des pics fins et multiples sans déplacement de la valeur maximale du pic en $\Theta$. Ce filtre $F_2$ est un filtre passe-bas.

Il en résulte la fonction F(d) recherchée qui est représentée sur la figure 6, sur laquelle la position des pics et leur hauteur relative donnent une cartographie directe des profondeurs $d_1$, $d_2$, $d_n$ d'interface de la structure réelle 10a à tester et les intensités associées. D'où l'on peut calculer la concentration x exacte des éléments dans les couches.

En conclusion, la Transformation selon l'invention ressemble à une transformée de Fourier simple. Ce n'en est cependant pas une.

En particulier, les fonctions sin et cos de la transformée de Fourier classique sont considérées entre les limites -∞, +∞, alors qu'ici nous avons des fonctions périodiques sur un intervalle limité. D'autre part la longueur d'onde de ces fonctions varie comme la longueur d'onde relative à une structure théorique 10b ou 10c, bâtie au moyen d'une couche sur un substrat, couche dont l'indice de réfraction diffère seulement légèrement de celui du substrat. C'est-à-dire que l'argument des sinus et cosinus varie.

Dans la plupart des applications de l'invention, la fonction CHIRP peut être calculée directement à partir de $\Theta$, au moyen de la relation suivante :

$$CH(\Theta) = (\sin^2\Theta - \sin^2\Theta_c)^{1/2}/\cos\Theta$$

et utilisée sous cette forme dans les intégrales de calcul de la fonction G(d).

Cette fonction peut être encore écrite pour les petits angles avec l'approximation suivante :

$$CH(\Theta) = (\sin^2\Theta - \sin^2\Theta_c)^{\frac{1}{2}}$$

Ce moyen direct d'évaluation de la fonction CH($\Theta$) a été obtenu selon l'invention à partir de la mise en oeuvre plus complexe décrite précédemment, et est donc une approximation de la fonction obtenue point par point à partir de $\lambda$ ($\Theta$) représentée sur la figure 3e.

Cependant cette fonction calculée est très proche de la précédente. La différence est tout à fait minime et négligeable dans la plupart des cas.

Dans la description précédente, on a énoncé les moyens pour parvenir aux buts de l'invention par la création d'une fonction quasi-sinusoïdale $h_1$ ou $h_2$, puis par la création de la fonction CH($\Theta$), suivies de la synthèse de la fonction quasi-sinusoïdale sin(d,$\Theta$).

Mais les fonctions quasi-sinusoïdales $K_i(d,\Theta)$ de l'intégrale G(d) peuvent très bien être remplacées par des fonctions quasi-périodiques dont la période varie de façon monotone en fonction de $\Theta$ de la même manière. Par exemple on peut utiliser des fonctions triangulaires périodiques.

On a présenté dans ce qui précède la possibilité de partir d'une structure hypothétique 10c avec une couche d'oxyde : cette hypothèse est particulièrement valable dans le cas où la structure réelle 10a est elle-même recouverte d'une couche d'oxyde. Ce cas est très fréquent dans la réalité quotidienne du fabricant de dispositifs semiconducteurs.

Donc si la structure réelle présente une surface oxydée, et si on utilise pour arriver aux buts de l'invention la filière de calcul passant par la structure théorique sans oxyde (Fig.2a), ou bien passant par la formulation mathématique directe de CHIRP ($\Theta$), on arrivera à évaluer les positions des interfaces $d_1$, $d_2$,... $d_n$ avec un écart de moins de 1 nm par rapport à leur position exacte. Ces positions seront cependant mieux évaluées en passant par la filière de calcul correspondant à la structure avec oxyde (fig.3a).

Néanmoins, tant que l'oxyde de la structure réelle est mince, on a une très bonne approximation en réalisant le calcul direct de CH($\Theta$) et on gagne considérablement en temps de calcul et en complexité du dispositif.

On peut donc dans la plupart des cas s'en tenir au calcul direct de CH($\Theta$), tout en conservant, dans le dispositif, les moyens pour un calcul plus précis éventuellement.

L'éventuel décalage entre les résultats obtenus avec et sans tenir compte de la couche d'oxyde vient du fait suivant.

Lorsque la surface supérieure d'une structure de couches est couverte d'un oxyde, on trouve deux interfaces proches l'une de l'autre :

- la première : air-oxyde,
- la seconde : oxyde-semiconducteur,

ces deux interfaces ayant des réflectivités du même ordre de grandeur.

On a dit plus haut que l'on allait dans ce cas considérer la couche d'oxyde comme une interface moyenne. Mais, le positionnement de cette interface moyenne située entre ladite première et seconde interfaces réelles dépend de l'épaisseur effective de l'oxyde. Plus l'oxyde est épais, plus forte est l'erreur induite par l'adoption de l'interface moyenne.

Le dispositif selon l'invention s'applique, à la différence des dispositifs qui font appel aux comparaisons avec des Tables de Classement, à des structures dans lesquelles les couches ont de très faibles différences d'indices, hormis la couche d'oxyde supérieure. Pour des différences d'indices supérieures à 1,5 ppm, les linéarités sont perdues, et il en résulte que la cartographie directe de d, devient moins précise.

L'invention vise une application pratique à des hétérostructures de matériaux semiconducteurs ayant des faibles différences d'indice parmi lesquels par exemple :

- GaAs, GaAlAs, GaInAs, AlInAs, InP, avec de nombreuses variations et combinaisons possibles de composés ternaires et quaternaires.
- les systèmes Si-Ge,
  Cd-Hg-Te,
  Zn-S, Zn-Se, Zn-Cd, etc...

On peut aussi appliquer cette méthode à des couches de revêtement sur des substrats non semiconducteurs.

En référence avec la figure 4b, le dispositif selon l'invention comporte donc les blocs fonctionnels suivants :

- un bloc fonctionnel 130 pour le stockage des données mesurées I = f($\Theta$)relatives à la structure réelle 10a à tester ;

- un bloc fonctionnel 131 pour le traçage de la courbe représentative I = f(Θ)telle que montrée sur la figure 1b.

Le dispositif comporte d'autre part les blocs fonctionnels suivants :

- un bloc 140 pour le stockage de données concernant la structure réelle 10a, c'est-à-dire l'indice de réfraction du substrat, l'indice de réfraction moyen de l'ensemble des couches de la structure réelle, la longueur d'onde $\lambda_{RX}$ des rayons X incidents ;
- un bloc 141 pour la définition d'une structure hypothétique 10b ou 10c à partir des données du blocs précédent 140 ;
- un bloc 142 pour le calcul de la réflectivité I = $t_1(\Theta)$ ou bien I = $t_2(\Theta)$ relative à l'une ou l'autre des structures hypothétiques choisies 10b ou 10c.

La sortie du bloc 142 est ensuite passée dans le bloc 131 de traçage de courbe représentative pour obtenir les courbes $t_1(\Theta)$ et $t_2(\Theta)$ telles que montrées sur les figures 2b et 2c.

La sortie du bloc 131 de traçage de courbe est portée dans un bloc fonctionnel 132 réalisant le filtrage par le filtre $F_1$ de toutes les fonctions à ce stade, c'est-à-dire aussi bien de la fonction mesurée f(Θ) pour obtenir la fonction g(Θ) que de la fonction théorique $t_1(\Theta)$ pour obtenir la fonction $h_1(\Theta)$ ou de la fonction théorique $t_2(\Theta)$ pour obtenir la fonction $h_2(\Theta)$.

Les fonctions théoriques $h_1(\Theta)$ ou $h_2(\Theta)$ sont ensuite portées dans le bloc fonctionnel 143 qui effectue le calcul de $\lambda(\Theta)$ et éventuellement de $\lambda_{rel}(\Theta)$, puis dans le bloc 144 qui effectue le calcul de CH(Θ) à partir de $\lambda(\Theta)$ ou $\lambda_{rel}(\Theta)$.

La fonction g(Θ) issue du bloc de filtrage 132 et la fonction CH(Θ) issue du bloc 144 sont ensuite introduites dans un bloc de calcul 134 des intégrales pour fournir la fonction G(d).

Puis la fonction G(d) est passée dans le filtre $F_2$ de diffusion matérialisé par le bloc 135. La sortie du bloc 135 fournit alors la fonction F(d) résultat de la Transformation selon l'invention.

Enfin la fonction finale F(d) est passée dans le bloc 137 de traçage qui en fournit la courbe représentative de la figure 6.

Entre le bloc 135 de filtrage et le bloc 137, un bloc 136 effectue les calculs relatifs à la position exacte des interfaces et à l'interpolation des intensités associées aux pics pour déterminer la composition des couches de part et d'autre de chaque interface.

En référence avec la figure 4a, le dispositif est simplifié. Il ne comporte pas de calcul de $\lambda(\Theta)$ mais seulement le calcul direct de

$$CH(\Theta) = (\sin^2 \Theta - \sin^2 \Theta_c)^{\frac{1}{2}}/\cos\Theta$$

dans un bloc 144'. Les autres blocs ont les mêmes fonction que ceux de la figure 4b.

## Revendications

1. Dispositif de traitement d'un signal mesuré correspondant à l'intensité réfléchie, en fonction de l'angle de rasance (Θ) à une longueur d'onde ($\lambda_{RX}$) de rayons X, par une structure réelle de couches multiples empilées sur un substrat (100), ces couches présentant à leurs interfaces des différences faibles d'indice de réfraction, ce dispositif de traitement comprenant des moyens pour effectuer la transformation de la fonction (f(Θ)) correspondant au signal d'intensité réfléchie mesuré en fonction de l'angle de rasance (Θ) dans un domaine d'angles de rasance limité par des valeurs d'angles minimales et maximales $\Theta_{min} - \Theta_{max}$, en une fonction (F(d)) correspondant au signal d'intensité formulé en fonction de la profondeur (d) dans la structure réelle de couches multiples, cette fonction (F(d)) obtenue permettant d'établir une cartographie directe des profondeurs de chaque interfaces ($d_1$, $d_2$, ... $d_n$) de la structure réelle, et des intensités réfléchies associées.

2. Dispositif selon la revendication 1, caractérisé en ce que, la fonction (f(Θ)) correspondant au signal d'intensité réfléchie en fonction de l'angle de rasance (Θ) présentant une surmodulation qui est la somme approximativement de fonctions périodiques à périodes variables de façon monotone en fonction de l'angle de rasance (Θ), les moyens de transformation de la fonction mesurée (f(Θ)) du signal d'intensité en fonction de l'angle de rasance (Θ), en la fonction (F(d)) du signal d'intensité en fonction de la profondeur (d) dans la structure comprennent des moyens d'intégration, sur le domaine $\Theta_{min} - \Theta_{max}$, de la fonction mesurée (f(Θ)) multipliée par une fonction $k_i(d,\Theta)$ périodique de la profondeur (d) et de l'angle de rasance (Θ), dont la période varie en fonction de l'angle de rasance (Θ) avec la même variation monotone que celle des fonctions périodiques qui sont les composantes de la fonction mesurée (f(Θ)).

3. Dispositif selon la revendication 2, caractérisé en ce qu'il comprend en outre un premier filtre $F_1$ passe-bande de type passe-haut pour couper les grandes longueurs d'onde du signal d'intensité réfléchie mesurée $f(\Theta)$, et fournir un signal filtré $g(\Theta)$.

4. Dispositif selon la revendication 3, caractérisé en ce qu'il comprend des moyens pour synthétiser ladite fonction périodique $k_i(d,\Theta)$ de la profondeur (d) et de l'angle de rasance ($\Theta$), dont la période varie de façon monotone en fonction de l'angle ($\Theta$) d'incidence dans le domaine d'angles $\Theta_{min}$ - $\Theta_{max}$, ces moyens de synthèse comprenant au moins des moyens de calcul appliqués à une structure hypothétique comportant au moins une couche d'indice de réfraction proche de l'incidence de réfraction moyen de la structure à couches multiples réelles, cette couche étant disposée sur un substrat d'indice de réfraction sensiblement égal à celui de la structure réelle et éventuellement une couche supérieure d'oxyde, lesdits moyens de calculs incluant :

   - des premiers moyens de calcul d'une fonction $t_1(\Theta)$ ou $t_2(\Theta)$ correspondant à un signal d'intensité réfléchie théorique à la longueur d'onde de rayons X, ($\lambda_{RX}$), en fonction de l'angle de rasance ($\Theta$), dans le domaine d'incidence rasante $\Theta_{min}$ - $\Theta_{max}$,
   - des seconds moyens de calcul d'une fonction ($\lambda(\Theta)$) correspondant à la longueur d'onde calculée pour chacune des valeurs $\Theta_1$, $\Theta_2$, $\Theta_k$... de l'angle d'incidence $\Theta$ dans le domaine d'angles $\Theta_{min}$ - $\Theta_{max}$,
   - des troisièmes moyens de calcul d'une fonction (CH ($\Theta$)) présentant la même variation monotone en fonction de l'angle ($\Theta$) que celle des composantes de la fonction mesurée, ladite fonction CH ($\Theta$) étant formulée par la relation CH ($\Theta_K$) = CH ($\Theta_{K-1}$) + $1/\lambda(\Theta)$ , ladite fonction périodique $k_i(d,\Theta)$ étant formulée par sin ($\beta.d.$CH $\Theta$)) + i $\pi/2$) , avec i = 0 ou 1, et $\beta$ = constante.

5. Dispositif selon la revendication 4, caractérisé en ce qu'il comprend aussi un filtre $F_1$ passe-bande du type passe-haut pour couper les grandes longueurs d'onde du signal d'intensité réfléchie théorique $t_1(\Theta)$ ou $t_2(\Theta)$ pour fournir un signal filtré $h_1(\Theta)$ ou $h_2(\Theta)$.

6. Dispositif selon la revendication 3, caractérisé en ce qu'il comprend des moyens pour synthétiser ladite fonction périodique $k_i(d,\Theta)$ de la profondeur (d) et de l'angle ($\Theta$) de rasance, dont la période varie de façon monotone en fonction de l'angle ($\Theta$) d'incidence dans le domaine $\Theta_{min}$ - $\Theta_{max}$, ces moyens de synthèse comprenant au moins des moyens de calcul d'une fonction (CH($\Theta$)) présentant la même variation monotone en fonction de l'angle $\Theta$ que celle des composantes de la fonction mesurée, ladite fonction CH étant formulée par la relation :

$$CH(\Theta) = (\sin^2\Theta - \sin^2\Theta_c)^{1/2}/\cos\Theta$$

où $\Theta_c$ = la valeur de l'angle critique pour la structure réelle formée de couches multiples, à la longueur d'onde $\lambda_{RX}$ de rayons x de travail, ladite fonction périodique étant formulée par

$$K_i(d,\Theta) = \sin(\beta.d.CH(\Theta) + i\frac{\pi}{2})$$

où $\beta$ est une constante égale à $4\pi/\lambda_{RX}$ et où i égal soit 0 soit 1.

7. Dispositif selon l'une des revendications 5 ou 6, caractérisé en ce que les moyens d'intégration réalisent le calcul des intégrales, et la somme de leur valeur absolue selon la relation :

$$G(d) = \left| \int_{\Theta_{min}}^{\Theta_{max}} f(\Theta)\ k_0(d,\Theta).d\Theta \right| + \left| \int_{\Theta_{min}}^{\Theta_{max}} f(\Theta).k_1(d,\Theta).d\Theta \right|$$

8. Dispositif selon la revendication 7, caractérisé en ce que les moyens d'intégration réalisent le calcul des intégrales et la somme de leur valeur absolue selon la relation :

$$G'(d) = G(d)/(\Theta_{max} - \Theta_{min})$$

9. Dispositif selon l'une des revendications 7 ou 8, caractérisé en ce qu'il comprend en outre un filtre $F_2$ de diffusion symétrique pour lisser la fonction G(d) issue de l'intégration, et pour obtenir la fonction de transformation F(d).

**Patentansprüche**

1. Vorrichtung zur Verarbeitung eines Meßsignals, das der reflektierten Intensität entspricht, unter Berücksichtigung des Ausfallwinkels ($\theta$), mit einer Röntgenstrahlenwellenlänge ($\lambda_{RX}$) durch eine reale Struktur einer auf einem Substrat (100) übereinander angeordneter Vielfachschicht, wobei diese Schichten an ihren Schnittstellen leichte Unterschiede des Brechungsindexes aufweisen, die Vorrichtung zur Verarbeitung enthält Mittel für die Vornahme der Umwandlung der Funktion (f($\theta$)), entsprechend dem Signal reflektierter Intensität, gemessen unter Berücksichtigung des Ausfallwinkels ($\theta$) in einem von den Werten der Mindest- und Höchstwinkel $\theta_{min}$-$\theta_{max}$ begrenzten Ausfallwinkelbereich und unter Berücksichtigung einer Funktion (F(d)) entsprechend dem Signal vorgegebener Intensität unter Berücksichtigung der Tiefe (d) in der realen Struktur der Vielfachschichten, diese erhaltene Funktion (F(d)) ermöglicht die Aufstellung einer direkten Kartographie der Tiefen jeder Schnittstelle ($d_1$, $d_2$, ... $d_n$) der realen Struktur und der damit verbundenen reflektierten Intensitäten.

2. Vorrichtung laut Anspruch 1, mit dem Merkmal, daß die Funktion (f($\theta$)) entsprechend dem Signal reflektierter Intensität unter Berücksichtigung des Ausfallwinkels ($\theta$) eine Übermodulation aufweist, die die annähernde Summe der periodischen Funktionen mit periodischen Variablen monotoner Art unter Berücksichtigung des Ausfallwinkels ($\theta$) ist, die Mittel für die Umwandlung der gemessenen Funktion (f($\theta$)) des Intensitätssignals unter Berücksichtigung des Ausfallwinkels ($\theta$) in der Funktion (F(d)) des Intensitätssignals unter Berücksichtigung der Tiefe (d) in der Struktur enthalten Mittel für die Integrierung im Bereich $\theta_{min}$-$\theta_{max}$ der gemessenen Funktion (f($\theta$)), multipliziert mit einer periodischen Funktion $k_i$(d, $\theta$) der Tiefe (d) und des Ausfallwinkels ($\theta$) mit derselben monotonen Variation unter Berücksichtigung des Winkels ($\theta$) wie die der periodischen Funktionen, die die Komponente der gemesenen Funktion (f($\theta$)) sind.

3. Vorrichtung laut Anspruch 2, mit dem Merkmal, daß sie zusätzlich einen ersten Filter $F_1$ vom Typ Hochpaß enthält, um die langen Wellenlängen des gemessenen reflektierten Intensitätssignals f($\theta$) zurückzuhalten und ein gefiltertes Signal g($\theta$) zu liefern.

4. Vorrichtung laut Anspruch 3, mit dem Merkmal, daß sie Mittel für die Synthetisierung der besagten periodischen Funktion $k_i$(d,$\theta$) der Tiefe (d) und des Ausfallwinkels ($\theta$) enthält, wobei die Periode monoton unter Berücksichtigung des Ausfallwinkels ($\theta$) im Winkelbereich $\theta_{min}$ - $\theta_{max}$ variiert, diese Mittel mindestens Berechnungsmittel enthalten, die auf einer hypothetischen Struktur angewandt werden, die mindestens eine Schicht mit einem Brechungsindex nahe des mittleren Brechungsindexes der Struktur multipler realer Schichten aufweist, diese Schicht auf einem Substrat mit einem grundlegend zur realen Struktur und eventuell der oberen Oxidschicht gleichen Brechungsindexex aufgebracht ist und die besagten Rechenmittel folgendes enthalten :

   - erste Mittel zur Berechnung einer Funktion $t_1$($\theta$) oder $t_2$($\theta$) entsprechend einem theoretischen reflektierten Intensitätssignal der Röntgenstrahlenwellenlänge ($\lambda_{RX}$), unter Berücksichtigung des Ausfallwinkels ($\theta$), im Bereich des Einfalls und Ausfall $\theta_{min}$ - $\theta_{max}$,
   - zweite Mittel zur Berechnung einer Funktion ($\lambda$($\theta$)) entsprechend der für jeden der Werte $\theta_1$, $\theta_2$, $\theta_k$... des Einfallwinkels $\theta$ im Winkelbereich $\theta_{min}$ - $\theta_{max}$ berechneten Wellenlänge,
   - dritte Mittel zur Berechnung einer Funktion (CH ($\theta$)) mit denselben monotonen Variationen unter Berücksichtigung des Winkels ($\theta$) wie die Komponenten der gemessenen Funktion, die besagte Funktion CH ($\theta$) wird über die Verbindung CH ($\theta_k$) = CH ($\theta_{K-1}$) + 1/$\lambda$($\theta$) formuliert,

   die besagte periodische Funktion $k_i$(d,$\theta$) wird mit sin ($\beta$.d.CH($\theta$)) + $\pi$/2) formuliert, mit i = 0 oder 1, und $\beta$ = konstant.

5. Vorrichtung laut Anspruch 4, mit dem Merkmal, daß sie außerdem einen Frequenzbereichsfilter $F_1$ vom Typ Hochpaß enthält, um die langen Wellenlängen des theoretischen reflektierten Intensitätssignals $t_1$($\theta$) oder $t_2$($\theta$) zurückzuhalten und ein gefiltertes Signal $h_1$($\theta$) oder $h_2$($\theta$) zu liefern.

6. Vorrichtung laut Anspruch 3, mit dem Merkmal, daß sie Mittel für die Synthetisierung der besagten periodischen Funktion $k_i$(d,$\theta$) der Tiefe (d) und des Ausfallwinkels ($\theta$) enthält, deren Periode monoton unter Berücksichtigung des Einfallwinkels ($\theta$) im Bereich $\theta_{min}$ - $\theta_{max}$ variiert, diese Synthesemittel enthalten mindesten Mittel zur Berechung einer Funktion (CH(θ)) mit derselben monotonen Variation unter Berücksichtigung des Winkels θ wie die der Komponenten der gemessenen Funktion, die besagte Funktion CH wird in folgendem Verhältnis formuliert :

$$CH(\theta) = (\sin^2\theta - \sin^2\theta_c)^{\frac{1}{2}}/\cos\theta,$$

wobei $\theta_c$ = der Wert des kritischen Winkels für die real aus multiplen Schichten gebildete Struktur ist, mit der Wellenlänge $\lambda_{RX}$ von Arbeitsröntgenstrahlen, die besagte periodische Funktion wird ausgedrückt mit :

$$K_i(d,\theta) = \sin(\beta.d.CH(\theta) + i\frac{\pi}{2})$$

wobei $\beta$ eine Konstante gleich $4\pi/\lambda_{RX}$ und i gleich 0 oder 1 ist.

7. Vorrichtung laut einem der Ansprüche 5 oder 6, mit dem Merkmal, daß die Integrationsmittel die Berechnung des Integrals vornehmen, und die Summe ihres absoluten Werts nach dem Verhältnis :

$$G(d) = \left|\int_{\theta_{min}}^{\theta_{max}} f(\theta).k_o(d,\theta) . d\theta\right| + \left|\int_{\theta_{min}}^{\theta_{max}} f(\theta).k_1(d,\theta) . d\theta\right|$$

8. Vorrichtung laut Anspruch 7, mit dem Merkmal, daß die Integrationsmittel die Berechnung der Integrale vornehmen, und die Summe ihres absoluten Werts nach dem Verhältnis :

$$G'(d) = G(d)/(\theta_{max} - \theta_{min})$$

9. Vorrichtung laut einem der Ansprüche 7 oder 8, mit dem Merkmal, daß sie zudem einen Filter $F_2$ der symmetrischen Diffusion für die Glättung der aus der Integration erhaltenen Funktion G(d) und für den Erhalt der Transformationsfunkion F(d) enthält.

## Claims

1. A device for processing a measured signal corresponding to the intensity reflected, as a function of the glancing angle (θ) at an X-ray wavelength ($\lambda_{RX}$), by a real multilayer structure stacked on a substrate (100), which layers exhibit small differences as regards refractive index at their interfaces, which processing device comprises means for transforming the function (f(θ)), corresponding to the reflected intensity signal measured as a function of the glancing angle (θ) in a range of glancing angles which is bounded by minimum and maximum angular values $\theta_{min}$ - $\theta_{max}$, into a function (F(d)) corresponding to the intensity signal formulated as a function of the depth (d) within the real multilayer structure, said function (F(d)) obtained enabling a direct map to be formed of the depth of each interface ($d_1$, $d_2$, ... $d_n$) of the real structure, and of the associated reflected intensities.

2. A device as claimed in Claim 1, characterized in that, the function (f(θ)) corresponding to the intensity signal reflected as a function of the glancing angle (θ) presenting an overmodulation which is approximately the sum of periodic functions with periods varying monotonously as a function of the glancing angle (θ), the means for transforming the measured function (f(θ)) of the intensity signal as a function of the glancing angle (θ) into the function (F(d)) of the intensity signal as a function of the depth (d) within the structure comprise means for integrating, over the range $\theta_{min}$-$\theta_{max}$, the measured function (f(θ)) multiplied by a periodic function $k_i(d, \theta)$ of the depth (d) and of the glancing angle (θ) whose period varies monotonously as a function of the glancing angle (θ) in the same way as that of the periodic functions which are the components of the measured function (f(θ)).

3. A device as claimed in Claim 2, characterized in that it also comprises a first band-pass filter $F_1$ of the high-pass type which serves to cut off the long wavelengths of the measured reflected intensity signal f(θ) and to supply a filtered signal 9(θ).

4. A device as claimed in Claim 3, characterized in that it comprises means for synthesizing said periodic function $k_i$ $(d,\theta)$ of the depth (d) and the glancing angle ($\theta$) whose period varies monotonously as a function of the angle ($\theta$) of incidence in the angular range $\theta_{min}$ - $\theta_{max}$, which synthesizing means comprise at least calculation means applied to a hypothetical structure comprising at least one layer having a refractive index in the vicinity of the mean refractive index of the real multilayer structure, said layer being provided on a substrate having a refractive index substantially equal to that of the real structure, and possibly an upper oxide layer, which calculation means include:

- first means for calculating a function $t_1(\theta)$ or $t_2(\theta)$ corresponding to a theoretical reflected intensity signal at the wavelength of X-rays, ($\lambda_{RX}$), as a function of the glancing angle ($\theta$), in the range of glancing angles $\theta_{min}$ - $\theta_{max}$,
- second means for calculating a function ($\lambda(\theta)$) corresponding to the wavelength calculated for each of the values $\theta_1$, $\theta_2$, $\theta_k$... of the glancing angle $\theta$ in the angular range $\theta_{min}$ - $\theta_{max}$,
- third means for calculating a function (CH($\theta$)) exhibiting the same monotonous variation as a function of the angle ($\theta$) as that of the components of the function measured, said function CH($\theta$) being formulated by the relation $CH(\theta_K) = CH(\theta_{K-1}) + 1/\lambda(\theta)$, said periodic function $k_i(d, \theta)$ being formulated by $\sin(\beta.d.CH \beta)) + i \pi/2)$, where
  $i = 0$ or 1 and $\beta$ = constant.

5. A device as claimed in Claim 4, characterized in that it also comprises a bandpass filter $F_1$ of the low-pass type for cutting off the long wavelengths of the theoretical reflected intensity signal, $t_1(\theta)$ or $t_2(\theta)$, in order to supply a filtered signal $h_1(\theta)$ or $h_2(\theta)$.

6. A device as claimed in Claim 3, characterized in that it comprises means for synthesizing said periodic function $k_1(d,\theta)$ of the depth (d) and the glancing angle ($\theta$) whose period varies monotonously as a function of the angle ($\theta$) of incidence in the range $\theta_{min}$ - $\theta_{max}$, which synthesizing means comprise at least means for calculating a function (CH($\theta$)) presenting the same monotonous variation as a function of the angle ($\theta$) as that of the components of the measured function, which function CH is formulated by the relation:

$$CH(\theta) = (\sin^2\theta - \sin^2\theta_c)^{\frac{1}{2}}/\cos\theta$$

where $\theta_c$ = the value of the critical angle for the real multilayer structure formed at the operating wavelength $\lambda_{RX}$ of X-rays, said periodic function being formulated by

$$K_i(d, \Theta) = \sin(\beta.d.CH(\Theta) + i\frac{\pi}{2})$$

where $\beta$ is a constant equal to $4 \pi /\lambda_{RX}$ and where i is equal to 0 or 1.

7. A device as claimed in any one of the Claims 5 or 6, characterized in that the integration means perform the calculation of integrals and form the sum of their absolute value in accordance with the relation:

$$G(d) = \left| \int_{\Theta_{min}}^{THEAT_{max}} f(\Theta).k_0 (d,\Theta) . d\Theta \right| + \left| \int_{\Theta_{min}}^{\Theta_{max}} f(\Theta).k_1 (d,\Theta) . d\Theta \right|$$

8. A device as claimed in Claim 7, characterized in that the integration means perform the calculation of the integrals and form the sum of the inabsolute value in accordance with the relation:

$$G'(d) = G(d)/(\theta_{max} - \theta_{min})$$

9. A device as claimed in one of the Claims 7 or 8, characterized in that it also comprises a symmetrical diffusion filter $F_2$ so as to smooth the function G(d) resulting from the integration and to obtain the transformation function F(d).

FIG.1a

FIG.7

FIG.1 b

FIG.1 c

FIG.2 a

FIG.3 a

FIG.2b

FIG.2c

| Mo | $d_0 = 1\,nm$ | $Re(1-n) = 9\,ppm$ |
| M1 | | $Re(1-n) = 13\,ppm$ |
| | $d_1 = 100\,nm$ | |
| M2 | | $Re(1-n) = 14,5\,ppm$ |
| | $d_2 = \infty$ | |

FIG.3b

FIG.3c

FIG.3d

FIG.3e

FIG.4

FIG.5

FIG.6